# EUROPEAN PATENT APPLICATION

(11) **EP 4 607 424 A1**
(43) Date of publication of application: **27.08.2025**
(21) Application number: 24216267.5
(22) Date of filing: 28.11.2024
(51) Int. Cl.: G06Q 10/08, G06Q 10/10, G06Q 50/00

(54) **COMPUTER-IMPLEMENTED METHOD FOR THE CLASSIFICATION AND ARCHIVING OF MEETINGS**

(30) Priority: 29.11.2023 IT 202300025395
(71) Applicant: Syma Italia S.r.l., 36100 Vicenza (VI) (IT)
(72) Inventor: GIRIBONE, Pier Giuseppe, 36100 VICENZA (VI) (IT); FERRARA, Marco, 36100 VICENZA (IT); GABRYLISZYN, Alicja, 36100 VICENZA (VI) (IT); JANISZEWSKI, Michal, 36100 VICENZA (VI) (IT); KRZAK, Michal, 36100 VICENZA (IT); MIKUS, Alicja, 36100 VICENZA (VI) (IT); PULKA, Sylwia, 36100 VICENZA (IT); SURMINSKA-SIKORSKA, Aleksandra, 36100 VICENZA (VI) (IT)
(74) Representative: Grana, Daniele

(57) **Abstract**

The computer-implemented method for the classification and archiving of meetings in a videoconferencing system or an in-person meeting recording system, comprises the following steps: recording the audio content of a meeting, acquired through a video conferencing system or an in-person meeting recording system; automatically transcribing by speech synthesis the audio content to obtain a textual content related to the conversation occurred during the meeting; processing the textual content to generate a summary containing the relevant aspects of the conversation; by means of at least one classifier, automatically classifying said summary by automatically assigning said summary to a specific task, selected from a plurality of predefined tasks.

## Description

### Technical Field

The present invention relates to a computer-implemented method for the classification and archiving of meetings in a video conferencing system or an in-person meeting recording system.

### Background Art

There is a growing need to devise new information technology tools which allows simplifying and speeding up the standard work (and non-work) tasks.

In particular, the use is well known of video conferencing systems or, alternatively, in-person meeting recording systems, while provided with increasingly technologically advanced functions and customizations such as automatic recording and transcription of meetings, nevertheless necessarily require subsequent tasks by users aimed at summarizing and organizing the content of the meetings.

This consequently results in time consumption and, very frequently, loss of information or, at any rate, impoverishment of contents.

In addition, very often, the contents of the meetings are summarized via email or within text documents and, therefore, are often difficult to trace by users who need to access them later.

### Description of the Invention

The main aim of the present invention is to devise a computer-implemented method for the classification and archiving of meetings usable in a video conferencing system or an in-person meeting recording system, which allows the automatic creation of a summary of the conversation that took place during the meeting and which, in addition, allows the classification and archiving of this summary, effectively associating it with a precise task, selected from several predefined tasks.

The aforementioned objects are achieved by the present computer-implemented method for the classification and archiving of meetings in a video conferencing system or an in-person meeting recording system, according to the characteristics described in claim 1.

### Brief Description of the Drawings

Other characteristics and advantages of the present invention will become more apparent from the description of a preferred, but not exclusive, embodiment of a computer-implemented method for the classification and archiving of meetings in a video conferencing system or an in-person meeting recording system, illustrated by way of an indicative yet non-limiting example in the accompanying tables of drawings in which:
Figure 1 is a general diagram of the computer-implemented method according to the invention;
Figure 2 is a diagram illustrating a training phase of a classifier system of the computer-implemented method according to the invention;
Figures 3 and 4 are diagrams illustrating the operation of the classifier system of the computer-implemented method according to the invention.

### Embodiments of the Invention

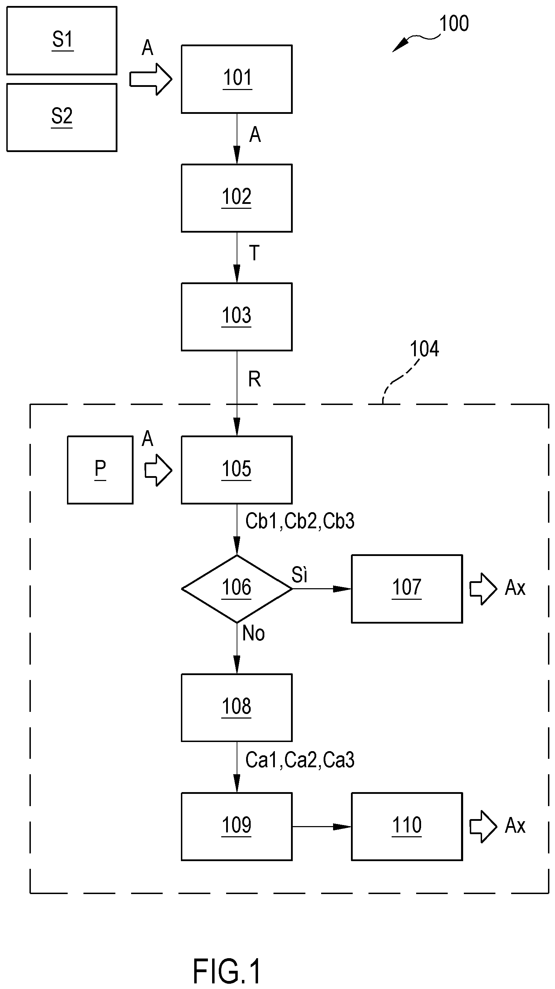

With particular reference to Figure 1, reference numeral 100 globally denotes a computer-implemented method for the classification and archiving of meetings, particularly usable in a video conferencing system or an in-person meeting recording system.

The computer-implemented method 100 comprises a first step 101 of recording the audio content A of a meeting, acquired through a video conferencing system S1 or an in-person meeting recording system S2.

Next, the computer-implemented method 100 comprises a step 102 of automatically transcribing by speech synthesis the audio content A to obtain a textual content T related to the conversation occurred during the meeting. According to a preferred embodiment, the step 102 of automatically transcribing the audio content A is carried out by means of a Generative pre-trained transformer.

For example, such a Generative pre-trained transformer can consist of a system of the speech-to-text type via ChatGPT API.

Alternative embodiments cannot however be ruled out.

In particular, in the case of using a video conferencing system, many software programs already in use are provided with a built-in speech-to-text system. In this case, it is therefore unnecessary to implement an additional automatic transcription system.

In addition, the computer-implemented method 100 comprises a step 103 of processing the textual content T to generate a summary R containing the relevant aspects of the conversation.

Preferably, such step 103 of processing the textual content is carried out by a Generative pre-trained transformer.

Specifically, again, such a Generative pre-trained transformer can be composed of a system of the speech-to-text type via ChatGPT API.

Alternative embodiments cannot however be ruled out.

Next, the computer-implemented method 100 comprises a step 104 of automatically classifying the summary R by automatically assigning such summary R to a specific task Ax, selected from a plurality of predefined tasks A1-Ai.

Such step 104 is carried out by means of at least one classifier C.

By means of the computer-implemented method 100 according to the invention, it is then possible to automatically create a summary R of the conversation occurred during the meeting, as well as to automatically classify and store such summary R in association with a specific task Ax.

In order to achieve proper classification, the computer-implemented method 100 comprises a preliminary phase of creating a database of predefined tasks in order to create an orderly and internally consistent information set. At this stage of the database creation, representative features are generated aimed at describing each individual task.

For example, with reference to the use of the computer-implemented method 100 according to the invention for the association with projects related to a business platform, it is necessary to start from a database of existing projects in the company. Examples of representative features of such projects may comprise the following: employees involved in the task, geographic identification, type of facility, estimated duration of the project and cash flows.

The generated features are used to carry out the probabilistic matching when assigning, via the classifier C, the summary R resulting from the meeting recording to the corresponding task.

Advantageously, the computer-implemented method 100 comprises a plurality of classifiers Cb1-Cbn, Cal-Cam which can be activated to perform the step 104 of classifying depending on a calculated assignment probability related to a specific task A1-Ai.

Specifically, each of the classifiers Cb1-Cbn, Cal-Cam uses, as independent variables of the multi-class classification problem, significant features for each predefined task A1-Ai and, as dependent variables (classes), identifiers assigned to existing predefined tasks A1-Ai

The step 104 of classifying comprises selecting, from the plurality of classifiers Cb1-Cbn, Cal-Cam, first a less complex classifier Cb1-Cbn and then scaling, depending on said assignment probability calculated for a specific task Ax, to a gradually more and more complex classifier Cal-Cam.

Specifically, the classifiers C which can be activated depending on a calculated assignment probability are selected from: basic classifiers Cb1-Cbn with reduced complexity, advanced classifiers Cal-Cam with higher complexity.

Therefore, if the computer-implemented method 100 detects, by employing the basic (less complex) classifiers Cb1-Cbn, a sufficiently high probability of assignment to a specific task Ax, then the use of an advanced (more complex) classifier Cal-Cam is unnecessary.

Otherwise, if the assignment probability associated with the basic classifiers Cb1-Cbn is below a predefined probability threshold (customizable at the design level), the method 100 comprises the activation of a subsequent advanced classifier Cal-Cam which is more advanced than those initially adopted. The aforementioned step of activating a subsequent classifier is repeated until the allocation percentage exceeds the predefined probability threshold.

The use of a plurality of classifiers Cb1-Cbn, Cal-Cam of gradually increasing complexity allows providing the following advantages:
- saving machine time for processing the information resulting in a faster response;
- adherence to the statistical principle of parsimony, according to which if it is possible to obtain a model performance which is considered optimal (i.e., above the probabilistic threshold) there is no reason to employ a more sophisticated mathematical approach to solving the same problem;
- the input being processed may be deeply uneven in nature, both in content type and in its intrinsic size (text length).

By way of example, the basic classifiers Cb1-Cbn comprise the following types of classifiers: Nearest Neighbors, Support Vector Machine (SVM) with linear, polynomial or Radial Basis Function (RBF) kernel, Gaussian Process, Decision Tree, Random Forest, AdaBoost, Naive Bayes, Quadratic Discriminant Analysis (QDA).

Preferably, at least one of the advanced classifiers Cal-Cam comprises an artificial neural network.

For example, the advanced classifiers Cal-Cam comprise the following types of classifiers: Shallow Neural Network, Multi-layer Neural Network, Deep Learner (by way of example, the Memory Transformer Network technology).

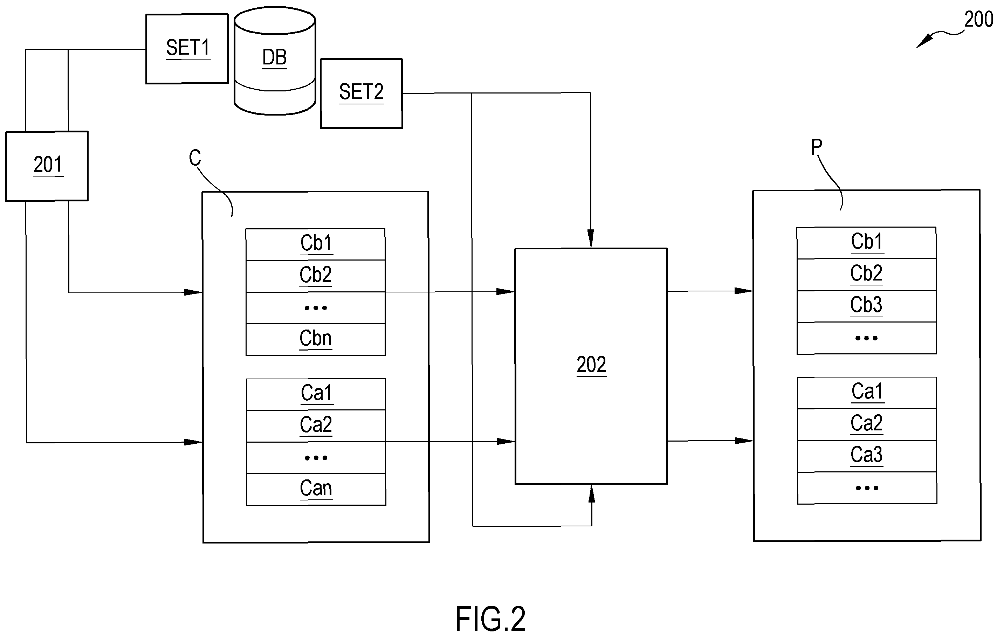

A phase 200 of training the used classifiers C contributing to the definition of the computer-implemented method 100 according to the invention is schematized in Figure 2.

Specifically, the phase 200 of training comprises at least the following steps:
- providing a training dataset DB containing values of independent variables, i.e., of significant features for each of the predefined tasks A1-Ai, and of dependent variables, i.e., identifiers assigned to each of the predefined tasks A1-Ai;
- randomly dividing the records of the training dataset DB into a training set SET1 and into a test set SET2;
- training the classifiers C on the training set SET1 by dividing them into basic classifiers Cb1-Cbn and advanced classifiers Cal-Cam (step 201).

Preferably, dividing the dataset DB into the training set SET1 and into the test set SET2 is done in accordance with a traditional splitting percentage (75%-25% or 80%-20% depending on the number of records available).

In addition, the phase 200 of training comprises a phase 202 of verification of the learning level using the test set SET2.

Specifically, the phase of verification 202 comprises at least the following steps:
- calculating and associating a reliability rating with each of the classifiers Cb1-Cbn, Cal-Cam and with reference to each of the predefined tasks A1-Ai;
- depending on the calculated reliability rating, creating a pool P of classifiers Cb1-Cbn, Cal-Cam with higher reliability rating (possibly discarding those for which the reliability rating is below a certain acceptability threshold), grouped into basic classifiers Cb1-Cbn and advanced classifiers Cal-Cam.

Therefore, the phase of verification 202, besides indicating whether the previous training phase of each individual classifier Cb1-Cbn and Cal-Cam has been successful, is useful in order to associate, within the relevant category, a reliability rating with each classifier Cb1-Cbn, Cal-Cam.

Specifically, the step of calculating and associating a reliability rating comprises at least the following steps:
- comparing the predicted theoretical values calculated from the set of significant features of the test set SET2 with the actually realized values;
- estimating an out-of-sample statistical measure which quantifies the error made in prediction and, consequently, estimating the reliability rating as a function of the error made in predicting the predicted theoretical values versus the actually realized values.

The typical measures that can be implemented for this purpose are Mean Squared Error (MSE) or Mean Absolute Error (MAE).

The phase 200 of training ends, therefore, with the definition of the pool P of best-performing classifiers Cb1-Cbn, Cal-Cam in terms of out-of-sample measure, again grouped by class of belonging (basic and advanced).

It should be noted that should the need arise to use more advanced classifiers and, consequently, provided with more hyper-parameters to be estimated, the method will involve the use of ad-hoc statistical techniques aimed at generating synthetic data using Monte Carlo methodology.

For deep learning methods, in accordance with the industry best practices, regularizers, such as the Drop Out technique, will be implemented in order to avoid *a priori* overfitting to the training data.

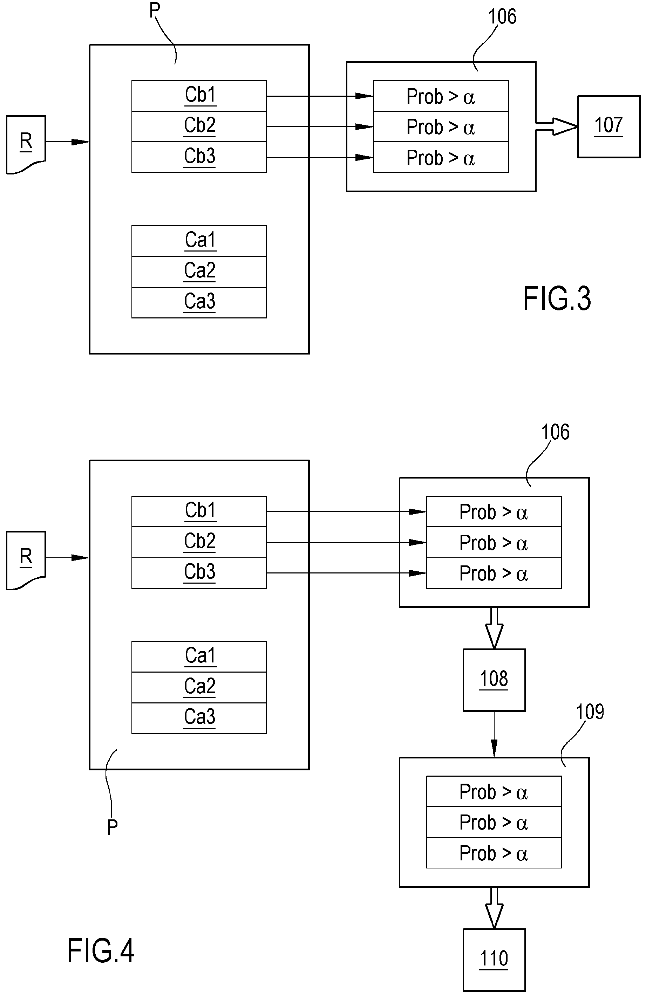

Figures 2 and 3, along with Figure 1, schematically illustrate the classification of a new instance, then a new summary R, using the computer-implemented method 100 according to the invention.

Specifically, the step 104 of automatically classifying the summary R comprises at least the following steps:
- selecting from the pool P of classifiers a predefined number (preferably three or more) of classifiers Cb1, Cb2, Cb3 from among the basic classifiers Cb1-Cbn with higher reliability rating with reference to the classification of new summary instances (step 105).
- verifying whether the probability of belonging to a specific task Ax for the considered summary exceeds a predetermined threshold level α for all the basic classifiers Cb1, Cb2, Cb3 selected (step 106),
- if so, directly assigning the summary R to that specific task Ax without the need to bring in additional more complex advanced classifiers Cal-Cam which would endorse the response of the basic classifiers Cb1, Cb2, Cb3 (step 107).

In other words, the probability of features belonging to a particular class is so high for the three best basic statistical approaches that it is sufficient to conclude the analysis.

This case history is schematically represented by the block diagram in Figure 3. If it occurs that the probability of belonging to a specific task Ax for the considered summary R does not exceed the predetermined threshold level α for at least one of the basic classifiers Cb1, Cb2, Cb3 selected, a predefined number (preferably three or more) of classifiers Ca1, Ca2, Ca3 is selected from the pool P of classifiers from the advanced classifiers Cal-Cam with higher reliability rating with respect to the classification of new summary instances (step 108).

At this point, the step 104 of classifying comprises the following steps:
- repeating the prediction via the selected advanced classifiers Ca1, Ca2, Ca3 until the probability of belonging to a specific task for the considered summary R exceeds a predetermined threshold level for all the selected advanced classifiers Ca1, Ca2, Ca3 (step 109);
- attributing the summary R to such specific task Ax (step 110).

Therefore, the defined selection criterion is to replace the basic classifiers Cb1, Cb2, Cb3 having sub-threshold probabilities with the best advanced classifiers Ca1, ca2, Ca3, as shown schematically in Figure 3.

If, despite repeating this optimization process, a statistically significant result is not achieved, the computer-implemented method 100 generates a warning signal for the user, informing him or her of the selectable task deemed most likely.

In this case, the automaticity of classification is interrupted because the choice of categorization must also be endorsed by the user of the procedure.

Therefore, the computer-implemented method comprises a set of classifiers which are able to discern, depending on new values associated with the features, which task (or project) most closely meets the expectations of its classification (labeling) within the existing ones.

The new instances, i.e., the new values associable with the features to be processed according to the logic specified above, are generated during the previous steps of the method, specifically the steps of recording, automatic transcribing and processing, so as to generate a summary in the form of textual tokens processed through techniques pertaining to models of the bag-of-words type.

Specifically, the computer-implemented method comprises the subdivision of the summary into a set of words (tokens) starting from which salient features are extracted that will populate instances of the new features used by the intelligent system of classifiers.

Such salient features are extracted with techniques pertaining to approaches defined by the term "bag-of-words", which are primarily based on the analysis of the frequencies of individual words or groups of words within the textual layout. Words that occur most frequently in the text or are otherwise characterized by inherent specific importance are cross-referenced with the words stored in appropriate dictionaries which are constructed of words that are potential instances for the features employed in the classification problem.

From this matching, the set of key values for which the intelligent system of classifiers is queried is then defined, which is responsible for defining the matching probabilities with existing and active tasks in the database.

It has in practice been ascertained that the described invention achieves the intended objects.

In particular, the fact is emphasized that the computer-implemented method according to the invention allows for the automatic creation of a summary of the conversation which occurred during the meeting and also allows for the classification and archiving of this summary by effectively associating it with a precise task, selected from several predefined tasks.

## Claims

1. Computer-implemented method (100) for the classification and archiving of meetings in a videoconferencing system or an in-person meeting recording system, **characterized by** the fact that it comprises at least the following steps:
- recording the audio content (A) of a meeting, acquired through a video conferencing system or an in-person meeting recording system (step 101);
- automatically transcribing by speech synthesis said audio content (A) to obtain a textual content (T) related to the conversation occurred during the meeting (step 102);
- processing said textual content (T) to generate a summary (R) containing the relevant aspects of said conversation (step 103);
- by means of at least one classifier (C), automatically classifying said summary (R) by automatically assigning said summary (R) to a specific task (Ax), selected from a plurality of predefined tasks (A1-A1) (step 104).

2. Computer-implemented method (100) according to claim 1, **characterized by** the fact that it comprises a plurality of classifiers (Cb1-Cbn, Cal-Cam) which can be activated to perform said step (104) of classifying depending on a calculated assignment probability related to a specific task (Ax).

3. Computer-implemented method (100) according to claim 2, **characterized by** the fact that each of said classifiers (Cb1-Cbn, Cal-Cam) uses as independent variables of the multi-class classification problem significant features for each predefined task and as dependent variables identifiers assigned to the existing predefined tasks (A1-Ai).

4. Computer-implemented method (100) according to one or more of the preceding claims, **characterized by** the fact that said step (104) of classifying comprises a step of selecting from said plurality of classifiers (Cb1-Cbn, Ca1-Cam) first a less complex classifier (Cb1-Cbn) and then scaling, depending on said assignment probability calculated for a specific task (Ax), to a gradually more and more complex classifier (Ca1-Cam).

5. Computer-implemented method (100) according to one or more of the preceding claims, **characterized by** the fact that said plurality of classifiers (Cb1-Cbn, Cal-Cam) which can be activated depending on a calculated assignment probability are selected from: basic classifiers (Cb1-Cbn) with reduced complexity, and advanced classifiers (Ca1-Cam).

6. Computer-implemented method (100) according to claim 5, **characterized by** the fact that said basic classifiers (Cb1-Cbn) comprise the following types of classifiers: Nearest Neighbors, Support Vector Machine (SVM) with linear, polynomial or Radial Basis Function (RBF) kernel, Gaussian Process, Decision Tree, Random Forest, AdaBoost, Naive Bayes, Quadratic Discriminant Analysis (QDA).

7. Computer-implemented method (100) according to one or more of claims 5 and 6, **characterized by** the fact that at least one of said advanced classifiers (Ca1-Cam) comprises an artificial neural network.

8. Computer-implemented method (100) according to claim 7, **characterized by** the fact that said advanced classifiers (Ca1-Cam) comprise the following types of classifiers: Shallow Neural Network, Multi-layer Neural Network, Deep Learner (by way of example, Memory Transformer Network technology).

9. Computer-implemented method (100) according to one or more of the preceding claims, **characterized by** the fact that it comprises a phase (200) of training said classifiers (Cb1-Cbn, Cal-Cam), said phase (200) of training comprising at least the following steps:
- providing a training dataset (DB) containing values of independent variables, i.e. of significant features for each of those predefined tasks (A1-Ai), and of dependent variables, i.e. identifiers assigned to each of said predefined tasks (A1-Ai);
- randomly dividing the records of said training dataset (DB) into a training set (SET1) and into a test set (SET2);
- training said classifiers (Cb1-Cbn, Cal-Cam) on said training set (SET1) by dividing them into basic classifiers (Cb1-Cbn) and advanced classifiers (Ca1-Cam).

10. Computer-implemented method (100) according to claim 9, **characterized by** the fact that said phase (200) of training comprises a phase (202) of verification of the learning level using said test set (SET2), wherein said phase (202) of verification comprises at least the following steps:
- calculating and associating a reliability rating with each of said classifiers (Cb1-Cbn, Cal-Cam) and with reference to each of said predefined tasks (A1-Ai);
- depending on said reliability rating, creating a pool (P) of classifiers (Cb1-Cbn, Cal-Cam) with higher reliability rating.

11. Computer-implemented method (100) according to claim 10, **characterized by** the fact that said step of calculating and associating a reliability rating comprises at least the following steps:
- comparing the predicted theoretical values calculated from the set of significant features of the test set (SET2) with the actually realized values;
- estimating said reliability rating depending on the errors made in the prediction of said predicted theoretical values compared to said actually realized values.

12. Computer-implemented method (100) according to one or more of the preceding claims, **characterized by** the fact that said step (104) of automatically classifying said summary (R) comprises at least the following steps:
- selecting from said pool (P) of classifiers a predefined number of classifiers (Cb1, Cb2, Cb3) from among the basic classifiers (Cb1-Cbn) with higher reliability rating with reference to the classification of new summary instances (R) (step 105).
- if the probability of belonging to a specific task (Ax) for said considered summary (R) exceeds a predetermined threshold level for all the basic classifiers (Cb1, Cb2, Cb3) selected (step 106), then directly assigning said summary (R) to said specific task (Ax) (step 107).

13. Computer-implemented method (100) according to claim 12, **characterized by** the fact that said step (104) of automatically classifying said summary (R) comprises at least the following steps:
- if the probability of belonging to a specific task (Ax) for said considered summary (R) does not exceed said predetermined threshold level for at least one of said basic classifiers (Cb1, Cb2, Cb3) selected (step 106), selecting from said pool (P) of classifiers a predetermined number of classifiers (Cal, Ca2, Ca3) from among the advanced classifiers (Cal-Cam) with higher reliability rating with reference to the classification of new summary instances (R) (step 108);
- repeating the prediction by means of said selected advanced classifiers (Cal, Ca2, Ca3) until the probability of belonging to a specific task (Ax) for said considered summary (R) exceeds a predetermined threshold level for all the advanced classifiers (Cal, Ca2, Ca3) selected (step 109);
- attributing said summary (R) to said specific task (Ax) (step 110).

14. Computer-implemented method (100) according to one or more of the preceding claims, **characterized by** the fact that said step (102) of automatically transcribing said audio content (A) is carried out by means of a Generative pre-trained transformer.

15. Computer-implemented method (100) according to one or more of the preceding claims, **characterized by** the fact that said step (103) of processing said textual content (T) to generate a summary (R) containing the relevant aspects of said conversation is carried out by means of a Generative pre-trained transformer.

16. Computer-implemented system for the classification and archiving of meetings in a video conferencing system or an in-person meeting recording system, **characterized by** the fact that it comprises at least one processing unit configured to carry out the computer-implemented method (100) according to one more of the preceding claims.
